# EUROPEAN PATENT APPLICATION

(11) **EP 2 587 812 A2**
(43) Date of publication of application: **01.05.2013**
(21) Application number: 11798309.8
(22) Date of filing: 25.04.2011
(51) Int. Cl.: H04N 13/00, H04N 7/24

(54) **METHOD FOR CONFIGURING STEREOSCOPIC MOVING PICTURE FILE**

(30) Priority: 24.06.2010 KR 20100060194
(71) Applicant: Korea Electronics Technology Institute, Gyeonggi-do 463-816 (KR)
(72) Inventor: CHUN, Sung-Moon, Seongnam-si Gyeonggi-do 463-810 (KR); CHOI, Byeong-Ho, Yongin-si Gyeonggi-do 448-161 (KR); SHIN, Hwa-Seon, Seongnam-si Gyeonggi-do 463-070 (KR)
(74) Representative: Klunker . Schmitt-Nilson . Hirsch
(86) International application number: PCT/KR2011/002983
(87) International publication number: WO 2011/162474

(57) **Abstract**

Disclosed is a method for configuring a stereoscopic moving picture file. According to one embodiment of the present invention, the method for configuring a stereoscopic moving picture file is to analyze a plurality of right and left images which constitute a stereoscopic moving picture, and to obtain disparity information and depth information of the stereoscopic moving picture file. Then, biostability information for the stereoscopic moving picture file is set using at least one piece of information obtained from the disparity information and depth information, and the set biostability information is included in the coded data of the stereoscopic moving picture.

## Description

### Technical Field

The present invention relates to a method for processing moving pictures, and more particularly, a method for configuring a stereoscopic moving picture file.

### Background Art

Binocular stereoscopic images (hereinafter, referred to as "stereoscopic images") refer to a pair of left and right images of the same object which are obtained, respectively, by left and right cameras which are spaced a predetermined distance apart from each other. The left image and the right image are taken of the same object from different viewpoints, and accordingly image information in the left and right images may differ from each other according to surface characteristics of the object or the location of a light source. The difference in image information between the left and right images of the same object is referred to as a disparity. The stereoscopic images generally indicate a pair of images obtained, respectively, by a left camera and a right camera, and in broader sense, it may refer to a pair of left and right images generated from a monoscopic image via a predefined conversion algorithm. The stereoscopic images are generally used to provide a three-dimensional (3D) effect on the displayed object.

Korean Patent Registration No. 716142, titled "Method for Transmitting Stereoscopic Image Data", and Korean Patent Registration No. 962696, titled "Method for Configuring Encoded Stereoscopic Image Data File" disclose a stereoscopic image input through a stereoscopic camera and a file format for configuring a stereoscopic image data file encoded based on an existing image codec. The above-identified Korean Patents describe definitions of a variety of additional information required for configuring the stereoscopic image data file, based on differences between a monoscopic (two-dimensional (2D)) image and a stereoscopic (3D) image, and also a file format capable of containing the additional information. In addition, the technical concept disclosed in the above-mentioned Korean Patents has been reflected to the MPEG international standard, named ISO/IEC Stereoscopic Video Application Format.

There has been a surge in popularity of 3D movies and 3D display devices, such as TVs, so the interest in stereoscopic video content has been increasing. In the currently stereoscopic video content market, the aforementioned international standard applies to formation, compression, storage, transmission and playback of stereoscopic image files. Also, according to the international standard, it is possible to form a file with stereoscopic images in a variety of resolutions, up to full high definition (HD), that is, 1920x1080. In addition, it is possible to use various schemes to form a stereoscopic image, including a side-by-side scheme and a frame sequential scheme.

In the meantime, various researches on image safety have been conducted. Image safety relates to the protection of viewers, and more particularly, those who are more likely to be affected, in terms of health, by moving pictures displayed via imaging media such as televisions, videos, video games, the Internet, etc. For example, the image safety may be involved with the prevention of photosensitive seizures (PSS) which are triggered by high-intensity light, or the prevention or reduction of Visually-Induced Motion Sickness (VIMS) which is caused by rapid and periodic image motion. Moreover, visual fatigue due to an excessive depth effect or a disparity between left and right images that constitute a stereoscopic image is associated with the image safety.

Stereoscopic image data obtained from acquired stereoscopic images undergoes a preprocessing in order to correct image quality distortion in the stereoscopic images. During the preprocessing, distortions may occur in left and right images. There may be an inherent disparity between the left and right images of the stereoscopic image, and, due to the distortion and disparity, a viewer of the stereoscopic moving pictures may experience visual fatigue. In addition, an excessive depth effect for providing sense of dimension, disparity depth cue, may increase the viewer's visual fatigue.

The visual fatigue provoked by the stereoscopic moving pictures may have a negative influence on viewer's health, and thus it may be regarded as a hindrance to the development of stereoscopic-content-related industries, such as stereoscopic movie industry or 3D TV industry. Therefore, it may need to minimize or control the influence, for example, the visual fatigue, of the stereoscopic moving pictures on viewers to a level that is appropriate to the individual viewers' health conditions. However, although the needs of control or reduction of such influence has been recognized, there has been no solution as of yet.

### Technical Problem

One of the technical problems to be solved by the present invention is to provide a method for configuring a stereoscopic moving picture file, which can reduce an influence of visual fatigue caused by stereoscopic images on a user's health and allows the user to use stereoscopic content in a comfortable and natural manner.

Another technical problem to be solved by the present invention is to provide a method for configuring a stereoscopic moving picture file, which can allow more people to enjoy stereoscopic content according to their personal comfort and health conditions.

### Technical Solution

The present invention provides a method for configuring a stereoscopic moving picture file, including: obtaining disparity information and depth information of the stereoscopic moving picture file by analyzing a plurality of left and right images that constitute a stereoscopic moving picture; setting image safety information of the stereoscopic moving picture file using at least one piece of information obtained from the disparity information and the depth information; and including the image safety information in encoded data of the stereoscopic moving picture.

The disparity information of the stereoscopic moving picture file may be obtained using at least one piece of information obtained from disparity area information and disparity size information with respect to the entire stereoscopic moving picture file.

The disparity area information may be related to a difference of a number of blocks or pixels between left and right images in each frame of the entire moving picture or is related to a variation rate of the number of blocks or pixels between the frames. The disparity size information may be obtained using a maximum value, a minimum value or an average value of disparity values, in units of blocks or pixels, of each frame of the entire moving picture or a rate of variation of the maximum value or the average value between the frames.

The depth information of the stereoscopic moving picture file may be obtained using at least one piece of information obtained from depth area information and depth size information with respect to the entire moving picture file.

Additional features of the invention will be set forth in the description which follows, and in part will be apparent from the description, or may be learned by practice of the invention.

### Advantageous Effects

Image safety issues, including visual fatigue, are considered critical problems in stereoscopic moving picture technology, which have to be resolved. However, since there are yet to be criteria or standards for the image safety, those who are creating stereoscopic images or using such stereoscopic content have difficulties in distribution and reproduction of the content. According to the exemplary embodiments of the present invention, image safety information is embedded into stereoscopic moving picture data, and thus classification and distribution of stereoscopic content based on the embedded image safety information are feasible. In addition, stereoscopic images are classified into several classes and such classification is used in the acquisition, storage, distribution, and broadcasting of the stereoscopic images, so that the safety of viewers can be ensured and viewers' fatigue can be reduced. Accordingly, it is possible for users to select and use stereoscopic content more suitable to the individual users with a smaller bit rate, when compared to an existing method, and clear classification criteria are provided to distributors as well as content creators, so that the relevant market can be more activated.

### Description of Drawings

The accompanying drawings, which are included to provide a further understanding of the invention and are incorporated in and constitute a part of this specification, illustrate embodiments of the invention, and together with the description serve to explain the principles of the invention.
FIG. 1 is a diagram illustrating an example of how to obtain a pair of right and left images that constitute a stereoscopic image.
FIG. 2 is a diagram illustrating examples of methods of configuring a stereoscopic image using obtained left and right images.
FIG. 3 is a diagram illustrating a flowchart illustrating a method for configuring a stereoscopic moving picture file according to an exemplary embodiment of the present invention.
FIG. 4 is a block diagram illustrating examples of image safety information being embedded into the above-described stereoscopic moving picture file.
FIG. 5 is a block diagram illustrating an example of a format of a stereoscopic moving picture file configured in accordance with an exemplary embodiment of the present invention.

### Mode for Invention

The invention is described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Before describing a method for configuring a stereoscopic moving picture file according to an exemplary embodiment of the present invention, a stereoscopic image will be first described. The description provided hereinafter is a part of unique characteristics of a stereoscopic image, which differentiate it from a monoscopic image.

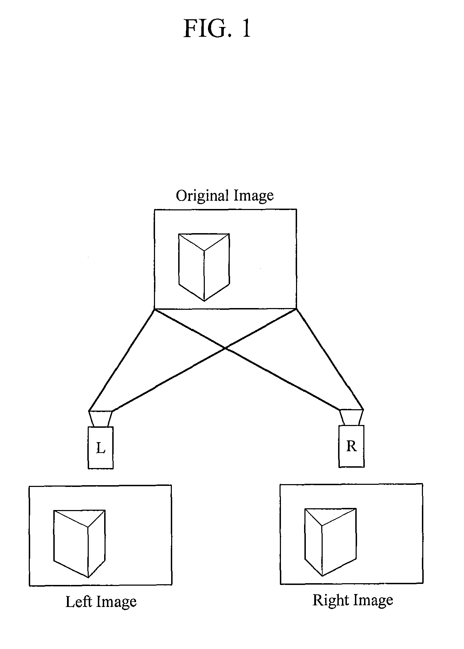

FIG. 1 is a diagram illustrating an example of how to obtain a pair of right and left images that constitute a stereoscopic image. Referring to FIG. 1, the left image and the right image that constitute a stereoscopic image may be obtained by a left camera and a right camera which are spaced a predetermined distance apart from each other. In the example shown in FIG. 1, left and right images of the same object are obtained by use of a stereoscopic camera. However, a pair of left and right images may be created using a monoscopic image.

In a stereoscopic image, there may be a disparity in image information (for example, luminance, color difference, a depth of object that indicates a distance from the object to a camera, etc.) between a left image and a right image because the left camera and the right camera have different viewpoints. For example, a left portion of an object in a left image may appear larger than in a right image, whereas a right portion of the same object in the right image may appear larger than in the left image. The disparity between the left image and the right image may be represented as a disparity in the luminance (mean) value or in the color difference (mean) value in units of pixels or blocks (e.g., M*N blocks) with a predetermined size.

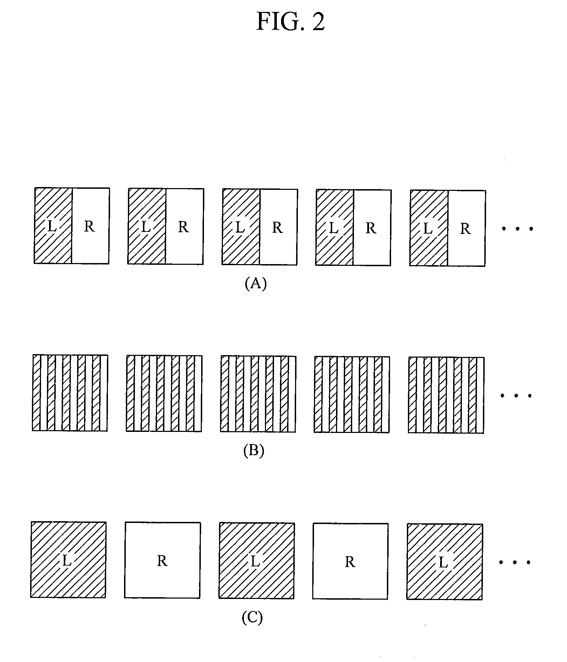

FIG. 2 is a diagram illustrating examples of methods of configuring a stereoscopic image using obtained left and right images.

Referring to (a) in FIG. 2, a left image and a right image are arranged horizontally ion one frame to configure a stereoscopic image. Referring to (b) in FIG. 2, odd-numbered (or even-numbered) vertical lines of the left image and even-numbered (or odd-numbered) vertical lines of the right image are alternately arranged to configured a stereoscopic image. A barrier type display device may display the stereoscopic image configured as shown in (b) in such a manner that the left vertical lines are perceived only with the left eye of a viewer and the right vertical lines are perceived only with the viewer's right eye. Referring to (c) in FIG. 2, left images and right images of the same object are alternately arranged on a frame-by-frame basis, which is referred to as a frame sequential type, to configure a stereoscopic image. The frame sequential type stereoscopic image is synchronized with a display device and can be viewed by use of specially designed glasses which can alternately screen the left eye and the right eye of a viewer using a frequency of 60Hz or higher, for example, 120Hz. The current three-dimensional (3D) televisions in wide use or 3D movies are utilizing this technique.

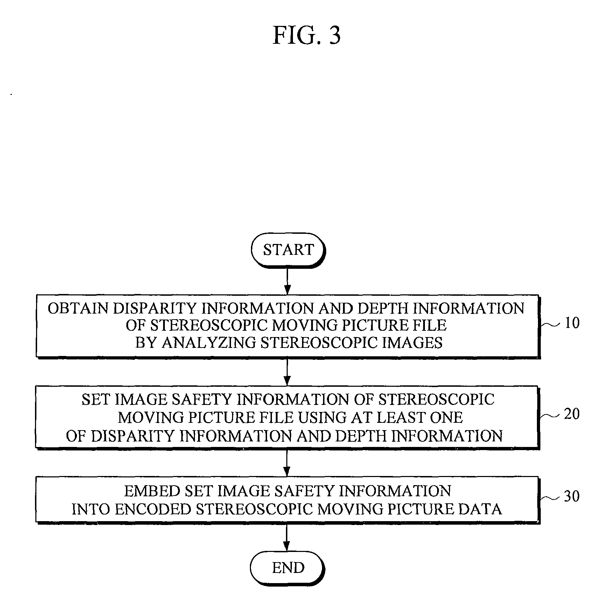

FIG. 3 is a diagram illustrating a flowchart illustrating a method for configuring a stereoscopic moving picture file according to an exemplary embodiment of the present invention.

Referring to FIG. 3, disparity information and depth information of a stereoscopic moving picture file are obtained by analyzing stereoscopic images (10). In this embodiment, a method or algorithm for analyzing the stereoscopic images may not be limited and any kind of analysis algorithms currently in use or developed in the future for stereoscopic image analysis may be employed. For example, left images and right images may be compared to each other on a frame-by-frame basis, and disparity information and depth information may be extracted from each frame. The disparity information, for example, luminance disparity and color difference disparity, may be extracted using or with reference to information, such as a size of an image filter, a filter capacity, a size of sum absolute difference (SAD) block, a minimum disparity value, disparity values (in units of pixels or blocks), a threshold of a reference image, and so on. In addition, using the disparity information obtained on a frame-by-frame basis, overall disparity information of the entire stereoscopic moving picture file may be acquired.

The disparity information represents information regarding a difference in luminance and in color difference between left and right images. Through the image analysis, the disparity information may be acquired or extracted on a frame-by-frame basis. However, as a stereoscopic moving picture file represents a group of a large number of frames, its disparity information may be acquired by obtaining disparity information of each frame belonging to the stereoscopic moving picture file. Further, the disparity information may indicate an image safety, such as human visual fatigue. A large disparity or temporal/special inconsistencies between the left and right images may aggravate such a visual fatigue of the viewer.

For example, a number of unit blocks with a predetermined size (for example, N*N blocks, where N and M are natural numbers equal to or greater than 1) which have a disparity within one frame, that is, one pair of left and right images, may be disparity information of the corresponding frame. Here, if N and M of the N*M block are both 1, the number of blocks having a disparity (hereinafter, referred to as "the number of disparity blocks") is obtained in units of pixels. The number of disparity blocks per frame differs in different frames, and thus it is difficult to use the number of disparity blocks itself as the disparity information of the stereoscopic moving picture file.

As one of method for utilizing the number of disparity blocks as disparity information of a stereoscopic moving picture file, an average number of disparity blocks or a rate of variation of the number of disparity blocks between frames may be used. Generally, a viewer who is viewing a stereoscopic image having a large area in which a great disparity (a severe change) in luminance or color difference is present between left and right images may be more likely to experience VIMS or visual fatigue.

Thus, in this embodiment, disparity area information (for example, the average number of disparity blocks or the rate of variation of the number of disparity blocks) of one moving picture file may be used as the disparity information of the stereoscopic moving picture file.

In another example, size of disparity may be used as disparity information of the stereoscopic moving picture file. Here, the size of disparity represents how much the luminance or color difference is different between the left and right images in units of blocks (or pixels). Since the sizes of disparity within a single frame may differ with location of the blocks (or pixels) in the frame, the size of disparity in one frame may be a maximum value, a minimum value, and/or an average value of disparity values within the frame. In addition, the size of disparity in the entire stereoscopic moving picture file may correspond to a maximum value, an average value or a rate of variation of the size of disparity between the frames. In general, the greater maximum value or average value of disparities in the entire moving picture file indicates that the disparity in luminance or color difference between left and right images is greater, on average, and thus the viewer who is viewing such stereoscopic images may be more likely to experience visually induced motion sickness (VIMS) or visual fatigue. Thus, the disparity size information of one moving picture file (e.g., a maximum value or an average value or a rate of variation of the average value of disparities in each frame) may be used as the disparity information of the stereoscopic moving picture file.

As such, using disparity area information and/or disparity size information of the entire moving picture files, the disparity information of the stereoscopic moving picture file may be obtained. However, the disparity information is not limited to the above, and the disparity information may be obtained using other data related to the disparity between left and right images.

To elaborate the above description, an area or a size of an area showing a disparity between the left and right image may be extracted on a frame-by-frame basis, and the disparity information of the entire moving pictures may be extracted using the extracted area or size of the area. More specifically,
1) A maximum value and an average value in one frame may be set using a quantity of disparity areas (in units of pixels or N*M blocks).
2) A maximum value and an average value in one frame may be set using the size of disparity areas (in units of pixels or N*M blocks).
3) A maximum value and an average value of the quantity and the size of disparity areas in one frame may be set as a maximum value and an average value of the entire moving pictures, and the set values may be displayed as parameter information (disparity information).
4) A maximum value and an average value with respect to disparity area variation in each frame (in units of pixels or N*M blocks) may be displayed as disparity information of the entire moving pictures.

It may be possible to extract the above-mentioned information from a stereo image pair (a left image and a right image) by use of simple program software, and the information may be utilized as criteria information for determining an image safety level of a stereoscopic moving picture file.

Hereinafter, an explanation of depth information will be provided. The depth information in the embodiments described herein refers to information related to a distance between an object and a camera. After all, from the view of a viewer, the distance between the object and the camera is related to how far the object in the currently displayed image is from the viewer. Also, the distance may be related to a disparity between the left and right images of the object. During viewing stereoscopic images, if a viewer is exposed to a display screen showing an object closer to the viewer for a relatively long period of time, the viewer may feel more visual fatigue, compared to when viewing an otherwise identical object that is farther from the viewer.

Like the disparity information, the depth information may be extracted on a frame-by-frame basis through image analysis, or may be obtained using the disparity information. Since one stereoscopic moving picture file is regarded as a group of a number of frames, the depth information of the stereoscopic moving picture file may be obtained based on depth information of each frame. However, in a case where the stereoscopic moving picture file is a graphic file, depth information can be acquired during the process of creating the graphic file and thus there may be no need of an additional analysis process for acquiring the depth information.

For example, in one frame, that is, a pair of left and right images, the depth information may be represented as a relative value with respect to an object closest to the viewer and an object farthest from the viewer or as a relative value with respect to a an object at a specific location. In a former case, to provide a realistic depth to a viewer, actual values of the closest distance and the farthest distance between the object and the viewer are required. In the latter case, the object may appear protruding or farther away according to the value of the depth information, which may be plus or minus.

In addition, a level of influence on an image safety, such as visual fatigue, may be determined by how much of a single frame an area associated with depth information covers. For example, when an object that appears protruding forward in the stereoscopic images occupies a relatively large area of the single frame, the viewer may experience more visual fatigue and also VIMS, as compared to when the object that appears protruding forward occupies a smaller area of the frame. More specifically, the degree of sickness that the viewer experiences may vary depending on a rate of an area associated with a depth value larger than a threshold, wherein the rate may be, for example, 20% or 70%. Thus, the depth area information of one moving picture file may be utilized as the disparity information of the stereoscopic moving picture file.

As another example, a size of a depth map may be used as depth information of the stereoscopic moving picture file. Here, the size of a depth map indicates a distance between an object and a camera in each block. Since the size of a depth map varies with location of the block in a single frame, the size of a depth map may be a maximum value, a minimum value and/or an average value of depths shown in the frame. In addition, a size of a depth map of the entire stereoscopic moving picture file may be a maximum value, a minimum value, an average value or a rate of variation of the size of a depth map between frames, or a difference between the maximum value and the minimum value.

Typically, when a maximum value or average value of the sizes of a depth map is large or a difference between the maximum value and the minimum value of the size of a depth map is large in each frame, it indicates that an object with a relatively large disparity in distance exists in the frame. Thus, the greater the distance is, the more likely the viewer experiences VIMS or visual fatigue during watching the stereoscopic images. Accordingly, information (e.g., a maximum value or an average of average values of sizes of depth maps in each frame, a rate of variation, a difference between the maximum value and a minimum value, or the like) about the size of a depth of one moving picture file may be used as depth size information of the stereoscopic moving picture file.

As such, by using the depth area information and/or depth size information of the entire moving picture file, the depth information of the stereoscopic moving picture file may be obtained. However, the depth information is not limited to the above-mentioned information, and the depth information may be obtained using other data related to a depth map or a sense of depth of the stereoscopic images. Further, the maximum value or average value of depth information of the entire moving pictures may be extracted, as described above in regard to the disparity information, by use of the disparity information or the depth information extracted from graphic data.

The disparity information and the depth information of one frame may be displayed as a representative value of the entire moving pictures. The maximum and minimum values and an average value of the disparity, the number of unit blocks (or unit pixels) showing a disparity, and a maximum value, a minimum value, an average value and a size ratio of area which can be acquired through a depth information map may be obtained. In addition, a variation of disparity information and depth information between frames may be defined as an element of parameters. For example, if the same large value of a disparity size or depth is maintained in different frames, the effect on an image safety may be relatively insignificant, whereas if a drastic change in the disparity value or depth occurs in the same area (in units of pixels or blocks) during a short period of time, the effect on the image safety may be relatively significant.

Referring to FIG. 3, using at least one piece of information from the disparity information and the depth information, which are obtained in operation 10, with respect to the stereoscopic moving picture file, image safety information of the stereoscopic moving picture file is set (20). The term "image safety information" is used only for purpose of example and any appropriate term related to image safety of the stereoscopic moving picture file may be used.

The image safety information is objective data that can be obtained using information resulting from analysis of a particular stereoscopic moving picture file, and in this embodiment, it is obtained using at least one piece of information out of the disparity information and the depth information with respect to the stereoscopic moving picture file. A method for representing the image safety information as data is not limited. For example, the image safety information may be represented as class information out of a number of pieces of class information (for example, class information related to quality stability) or as a grade set in accordance with predefined criteria.

Further, the set image safety information is included or embedded into encoded stereoscopic moving picture data (30). A location or the number of times of embedding the image safety information into the stereoscopic moving picture data is not limited. For example, the image safety information may be embedded into a file header or the like only once or into a frame header several times, or may be regularly embedded into a frame header of an encoded image data file such that the image safety information can be displayed at predetermined time intervals (e.g., every five or ten minutes).

As such, the image safety information included in the stereoscopic moving picture data may be used for viewers to select the corresponding stereoscopic moving picture file based on a sense of dimension, image safety, and the like, may be provided, in advance, to the viewers as safety information of the stereoscopic moving picture file, or may be used for adjusting a three-dimensional effect of the stereoscopic moving pictures to a level desired by the viewer.

As described above, in the embodiments of the present invention, image characteristics of stereoscopic moving pictures are analyzed to obtain information related to image safety, such as visual fatigue, VIMS, and the like which may be caused during a viewer is watching stereoscopic images, and the obtained information is included, as additional data, in a corresponding stereoscopic moving picture file.

In addition, issues other than the above-addressed issues, including the creating, distributing and playback of a stereoscopic moving picture file, may be raised in terms of the quality stability of the stereoscopic moving pictures. For example, the issues may include the addition of metadata with specific properties to a file format in an effort to correct image quality distortion occurring during the acquisition of stereoscopic images, and the composition and addition of components related to the metadata of the file format for the safety of stereoscopic content with respect to the human visual fatigue.

Currently, since no criteria for the stereoscopic moving pictures exist, there has been, primarily, a distortion in the image quality of created stereoscopic image content due to a disparity between left and right images and a variety of distortions in the left and right images, and visual fatigue that a viewer experiences while watching the stereoscopic moving pictures may be increased due to too much depth effect in accordance with depth information. To overcome the above drawbacks, control components may be defined and criteria for the components may be set up. Then the relevant components may be applied to a file format of stereoscopic content during the content creation process, such that viewers can watch the stereoscopic (or 3D) content in a comfortable and natural manner, and examples of a method for these procedures are provided in detail in the above-described embodiments.

In addition, it may be needed to modify the criteria for human visual fatigue with respect to a stereoscopic image captured from stereoscopic still images or moving pictures taken by a binocular camera including left and right optical systems and to correct an image quality distortion occurring in the course of the acquisition of the stereoscopic image, and setting up criteria for the correction may be required. Along with the described-above components associated with the visual fatigue, components for correcting image quality of a stereoscopic image may be defined as metadata of a file, and such metadata may be used to maximize the stability and image quality representation of the stereoscopic image.

According to the method in the above-described embodiments, a stereoscopic moving picture file is configured by including additional data, and stereoscopic content that requires a long period of time for viewing and stereoscopic content that provides a realistic sense of depth for a short period of time of watching may be classified and defined by grades. The viewers of the stereoscopic moving picture file may use such additional data as a reference and/or may use the data to play back the stereoscopic moving picture file (if necessary, to adjust the stereoscopic moving picture to have a depth effect of a desired level and play back the adjusted file).

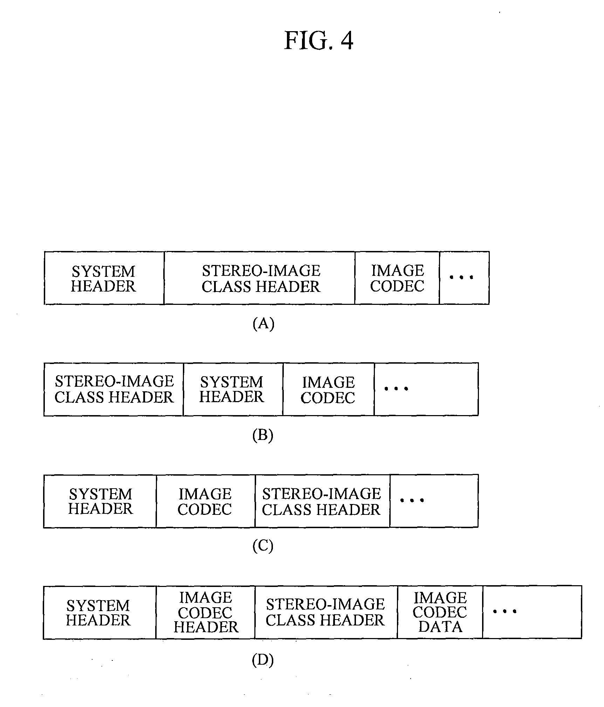

FIG. 4 is a block diagram illustrating examples of image safety information being embedded into the above-described stereoscopic moving picture file. Class information used in the examples shown in FIG. 4 includes the above-discussed image safety information, and is provided only for purpose of example. Referring to (a) in FIG. 4, a stereoscopic class header follows a system header. In (b) in FIG. 4, the stereoscopic class header precedes the system header, in (c) in FIG. 4, the stereoscopic class header follows an image codec and in (d) in FIG. 4, the stereoscopic class header is interposed between image codecs.

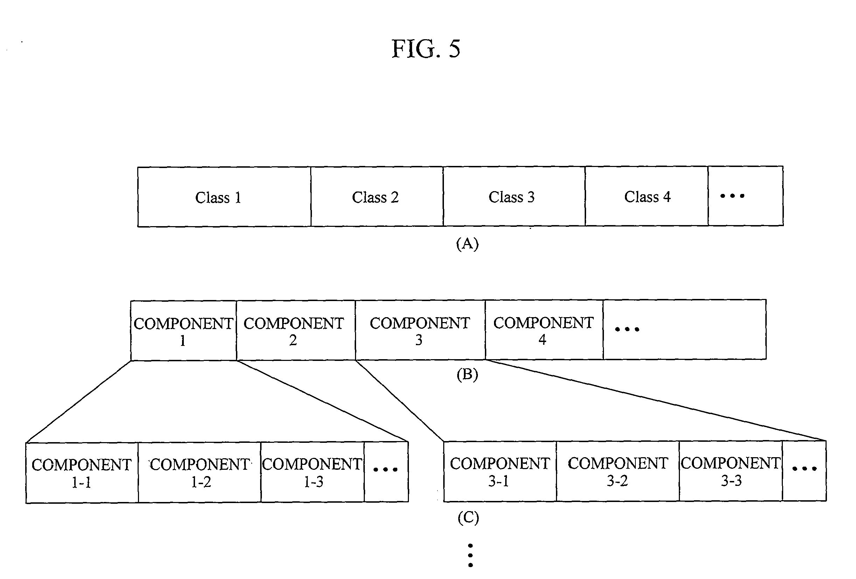

FIG. 5 is a block diagram illustrating an example of a format of a stereoscopic moving picture file configured in accordance with an exemplary embodiment of the present invention. (a) in FIG. 5 shows an example of a file header that classifies the stereoscopic moving picture file into classes 1, 2, 3, and more, and (b) in FIG. 5 shows a diagram illustrating primary classifications of components associated with the stereoscopic images defined by each class shown in (a) in FIG. 5. (c) in FIG. 5 shows secondary classifications of the components shown in (b) which are associated with the stereoscopic images that are further classified and defined.

The stereoscopic moving picture file configured in accordance with the above-described exemplary embodiments of the present invention includes image safety information. Based on the image safety information, the stereoscopic moving picture file may be classified into a number of classes. For example, stereoscopic content, such as advertisement with a running time of, for example, 20 seconds to several minutes, may be provided for a very short period of time to offer realistic 3D effects in an effort to improve image quality distortion occurring when a stereoscopic image is reconfigured based on human visual fatigue and left and right images of the stereoscopic image, and this stereoscopic content may be defined as "class 1". For example, stereoscopic content, such as movies, dramas or animations with a running time of 30 minutes to 3 hours, shows relatively superior 3D effects but a relatively low level of depth, so that viewers do not experience much difficulty in viewing except for momentary visual fatigue, and such stereoscopic content may be defined as "class 2". In addition, stereoscopic images for use in stereoscopic broadcasting may have 3D effects reduced to enable a wide range of viewers with different visual capabilities, including children and the aged, to experience less visual fatigue and to protect the visual safety of the viewers, so that the viewers do not feel uncomfortable or sick even when they watch the stereoscopic broadcasting content the whole day long. Such stereoscopic content may be classified as, for example, "class 3". In addition, stereoscopic content obtained by converting two-dimensional (2D) images into 3D images may be classified as "class 4", and various classifications of other types of stereoscopic content may be performed.

As such, information related to the image safety is provided, in advance, to general viewers of stereoscopic content in consideration of the human visual fatigue and, if necessary, image quality distortion is corrected or image data for applying a 3D effect is modified, such that not only the viewers can enjoy the content safely but also an image with superior quality can be provided.

The image safety information may be used to classify the stereoscopic moving picture file into one of a plurality of classes, as described above. Parameters affecting the image safety may be used to classify the stereoscopic moving picture file into one of a number of classes, and examples of the parameters are provided below.

For example, disparity information and depth information obtained from left and right images may be used as parameters for classification, as described above. Additionally, brightness information, color difference information, focal point information, information about minimum viewing distance with respect to image size, convergence scheme (parallel stereo camera system or crossing stereo camera system) information, an allowable range of a time difference between main object and background, lighting and audio information of a viewing space, horizontal and vertical viewing angles, an allowable range of display crosstalk, a display refresh rate, information of broken subtitles, error tolerance for boundary values of an object, information about age limit for viewing, caution information for squint-eyed or astigmatic viewers, information about a difference between the left eye and the right eye of each viewer, an allowable range of disparity of convergence and adjustment (vertical error, rotational error, and size error), and the like may be defined as components related to the stereoscopic images. In addition to the above-mentioned factors, the brightness of the viewing environment may affect the visual fatigue. The brightness of a 3D movie may be lower than that of a 2D movie and the visual fatigue may increase depending on the brightness of the surrounding environment.

The above-identified components may be further classified according to a type of component. For example, the components related to an image may be classified into first components, and the components, such as the brightness of the surroundings, which are related to a viewing environment, may be classified into second components. The components, such as age limit for viewing, which are related to viewers' characteristics, may be classified into third components. In addition, the components may be classified into fourth or more components based on other properties.

The components related to an image may be further classified into a number of groups of components. For example, a first group of components may include depth information or disparity information which are directly associated with the visual fatigue of the image, a second group of components may include information about image quality distortion in a stereoscopic image, distortion information of broken subtitles, and error information of object boundary value, and the like. If necessary, the components may be classified in detail into three or more groups of components.

As the units for use in classification and representation of the above-described class components, an actual distance value may be recorded with an index which is a specific indication value and assigned based on distance information, such as depth information or disparity information, and may be represented by the units rating from, for example, 1 to 10. Alternatively, two or more components may be combined as one index.

Image safety issues, including visual fatigue, are considered critical issues in stereoscopic image technology, which have to be solved. However, since there are yet to be criteria or standards for these issues, those who are creating stereoscopic images or using such stereoscopic content have difficulties in distribution and reproduction of the content. According to the exemplary embodiments of the present invention, image safety information is embedded into stereoscopic moving picture data, and thus it becomes possible to classify and distribute stereoscopic content based on the embedded image safety information. In addition, stereoscopic images are classified into several classes and such classification is used in the acquisition, storage, distribution, and broadcasting of the stereoscopic images, so that the safety of viewers can be ensured and viewers' fatigue can be reduced. Accordingly, it is possible for users to select and use stereoscopic content more suitable to the individual users with a smaller bit rate, when compared to an existing method, and clear classification criteria are provided to distributors as well as content creators, so that the relevant market can be more activated.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

### INDUSTRIAL APPLICABILITY

The present invention can be efficiently applied to an encoder, a decoder, and the like, which are related to processing of a stereoscopic image.

## Claims

1. A method for configuring a stereoscopic moving picture file, comprising:
obtaining disparity information and depth information of the stereoscopic moving picture file by analyzing a plurality of left and right images that constitute a stereoscopic moving picture;
setting image safety information of the stereoscopic moving picture file using at least one piece of information obtained from the disparity information and the depth information; and
including the image safety information in encoded data of the stereoscopic moving picture.

2. The method of claim 1, wherein the disparity information of the stereoscopic moving picture file is obtained using at least one piece of information obtained from disparity area information and disparity size information with respect to the entire stereoscopic moving picture file.

3. The method of claim 2, wherein the disparity area information is related to a difference of a number of blocks or pixels between left and right images in each frame of the entire moving picture or is related to a variation rate of the number of blocks or pixels between the frames.

4. The method of claim 2, wherein the disparity size information is obtained using a maximum value, a minimum value or an average value of disparity values, in units of blocks or pixels, of each frame of the entire moving picture or a rate of variation of the maximum value or the average value between the frames.

5. The method of claim 1, wherein the depth information of the stereoscopic moving picture file is obtained using at least one piece of information obtained from depth area information and depth size information with respect to the entire moving picture file.
